# EUROPÄISCHE PATENTSCHRIFT

(11) **EP 3 369 607 B1**
(45) Veröffentlichungstag und Bekanntmachung des Hinweises auf die Patenterteilung: **12.07.2023**
(21) Anmeldenummer: 18155493.2
(22) Anmeldetag: 07.02.2018
(51) Int. Cl.: B60M 1/30

(54) **STROMSCHIENENSYSTEM**
BUSBAR SYSTEM
SYSTÈME DE RAIL CONDUCTEUR

(30) Priorität: 02.03.2017 DE 202017101187 U
(43) Veröffentlichungstag der Anmeldung: 05.09.2018
(73) Patentinhaber: REHAU Industries SE & Co. KG, 95111 Rehau (DE)
(72) Erfinder: Deistler, Thomas, 95158 Kirchenlamitz (DE); Meinel, Udo, 95111 Rehau (DE)

(56) Entgegenhaltungen:
- WO-A1-2006/100267
- CN-U- 201 824 902
- DE-A1- 2 148 694
- DE-U1- 8 806 387
- DE-U1-202011 052 266

## Beschreibung

Die Erfindung betrifft ein Stromschienensystem umfassend wenigstens eine Stromschiene, wenigstens ein Befestigungssystem mit einer ersten Befestigungsvorrichtung sowie einer zweiten Befestigungsvorrichtung, wenigstens einer Trägervorrichtung, wobei das Befestigungssystem an der Trägervorrichtung, wenigstens eine Stromschiene aufnehmend, fixierbar ist.

Stromschienen haben sich seit Jahren im Stand der Technik etabliert und bewährt. Ein Stromschienensystem mit den eingangs beschriebenen Merkmalen wird in der DE 1615545 A1 beschrieben. Dieses Stromschienensystem weist einen Stromschienenträger auf, bestehend aus einem Stromschienenbock, an dem die Stromschiene mittels einer an einem tragenden Isolator angebrachten Klaue befestigt ist. Dieses Stromschienensystem soll so ausgebildet sein, dass sogenannte Erdschlüsse bzw. Kurzschlüsse vermieden werden sollen, um schwerwiegende Betriebsstörungen des Stromschienensystems vermeiden zu können. Weiterhin soll eine größere Betriebssicherheit durch geeignete Ausbildung des Isolators erreicht werden. Dazu ist der tragende Isolator ein glasfaserverstärkter Kunststoffstab, dessen eines Ende mit dem Stromschienenbock verbunden und an dessen anderem Ende die Klaue angebracht ist. Nachteilig bei diesem Stromschienensystem ist, dass dieses aus verschiedenen Teilstücken gebildet ist, die wiederum aus unterschiedlichen Werkstoffen wie Metallen bzw. glasfaserverstärktem Kunststoff hergestellt sind. Dies erhöht sowohl den Herstellungs- als auch den Logistikaufwand derartig hergestellter Stromschienensysteme. Weiterhin nachteilig ist, dass die verwendeten Befestigungssysteme sowie die tragenden metallischen Teile geeignet sind, die Bildung von sogenannten Kriechströmen zu begünstigen. Ebenfalls nachteilig bei diesem Stromschienensystem wird der nicht unerhebliche Aufwand bei der Montage sowie der Befestigung bzw. Justierung der Stromschiene gesehen.

In der DE 88 06 387 U1 ist ein weiteres Stromschienensystem beschrieben. Dieses Stromschienensystem umfasst einen Installationsträger aus glasfaserverstärktem Polyesterharz mit einem Fußteil und einem daran festgelegten Tragarm für die Stromschiene, wobei das Fußteil einstückig ausgebildet ist und an seinem freien Ende mit Innenbereichen des Tragarms eine Halteaufnahme für den Haltebereich der Stromschiene bildet. Bei diesem Stromschienensystem soll der Isolationsträger so ausgebildet sein, dass die Befestigungsklammer für die Stromschiene ohne metallische Befestigungselemente im Aufnahmebereich des Tragarms festgelegt ist. Dies soll dadurch realisiert werden, dass der Tragarm zweistückig aus einem fußteilseitigem Formstück und einem Kopfbereich besteht und dass das Formstück mit dem freien Ende des Fußteils unlösbar verbunden ist, während der Kopfbereich über eine Gleitpassung mit dem Formstück verbunden und über ein eine Presspassung bewirkendes Klemmelement an diesem lösbar festgelegt ist. Dieses Stromschienensystem hat sich erfolgreich bewährt, da es einfach montierbar und kostengünstig herstellbar ist. Einschränkend bei diesem Stromschienensystem wird gesehen, dass dieses nur für eine definierte Einbausituation einer Stromschiene verwendbar ist, so dass eine Veränderung bspw. der vertikalen Position der Stromschiene nur über zusätzliche Isolationsträger realisierbar ist. Weiterhin ist aus der DE 20 2011 052266 U1 ein Stromschienensystem bekannt.

Der Erfindung liegt die Aufgabe zugrunde, ein Stromschienensystem aufzuzeigen, welches wirtschaftlich und kostengünstig herstellbar ist, welches eine hohe Funktions- bzw. Lebensdauer aufweist, welches eine einfache, baustellengerechte sowie kompakte Bauweise aufweist und welches bei bestimmungsgemäßer Verwendung mechanisch stabil sowie den elektrischen Anforderungen insbesondere an Kriechstrecken vollumfänglich entspricht. Erfindungsgemäß wird die Aufgabe durch die Merkmale des Anspruches 1 gelöst. Weitere vorteilhafte Ausgestaltungen des erfindungsgemäßen Stromschienensystems sind in den Unteransprüchen beschrieben.

Es hat sich überraschend herausgestellt, dass ein Stromschienensystem gemäß Anspruch 1 umfassend wenigstens eine Stromschiene, wenigstens ein Befestigungssystem mit einer ersten Befestigungsvorrichtung sowie einer zweiten Befestigungsvorrichtung, wenigstens einer Trägervorrichtung, wobei das Befestigungssystem an der Trägervorrichtung, wenigstens eine Stromschiene aufnehmend, fixierbar ist, wobei die Befestigungsvorrichtungen des Befestigungssystems aus einem nicht elektrisch leitfähigen Material hergestellt sind, wobei die erste Befestigungsvorrichtung eine Basis mit zwei daran, einander gegenüberliegend, angeordneten Halteelementen aufweist, die die Trägervorrichtung vollflächig haltend umgreifen, wobei die erste Befestigungsvorrichtung wenigstens ein, über eine Aufnahmenut von der Basis beabstandet angeordnetes, die Stromschiene wenigstens teilweise abstützendes, Auflageelement aufweist und die erste Befestigungsvorrichtung eine Höhe aufweist, die etwa der doppelten Breite der Stromschiene entspricht. In dieser vorteilhaften Ausgestaltung des erfindungsgemäßen Stromschienensystems ist sichergestellt, dass es einerseits eine einfache, baustellengerechte sowie kompakte Bauweise aufweist und dass durch diese vorteilhafte Ausgestaltung insbesondere die elektrischen Anforderungen bspw. an Kriechstrecken bzw. Luftstrecken vollumfänglich realisierbar sind. Unter Luftstrecken ist zu verstehen, die kürzeste Entfernung in Luft zwischen zwei leitenden Teilen. Unter Kriechstrecke ist gemeint, die kürzeste Entfernung entlang der Oberfläche eines Isolierstoffs zwischen zwei leitenden Teilen. Die leitenden Teile des erfindungsgemäßen Stromschienensystems sind einerseits die Stromschiene, die verschiedenen Fixierelemente, sowie die Trägervorrichtung, sofern sie aus einem elektrisch leitfähigen Material besteht. Ein weiterer Vorteil des erfindungsgemäßen Stromschienensystems in der beschriebenen Ausführungsform besteht darin, dass dies äußerst wirtschaftlich und kostengünstig herstellbar ist.

Das erfindungsgemäße Stromschienensystem zeichnet sich weiterhin dadurch aus, dass die Halteelemente der ersten Befestigungsvorrichtung eine Höhe aufweisen, die etwa der doppelten Breite des Profilfußes der Stromschiene entspricht. Hierdurch ist gewährleistet, dass die stromführende Stromschiene sicher fixiert und eben auch von den anderen elektrisch leitenden Teilen ausreichend beabstandet angeordnet ist, da die Befestigungsvorrichtungen des Befestigungssystems aus einem elektrisch nicht leitfähigen Material hergestellt sind.

Es hat sich weiterhin als vorteilhaft herausgestellt, dass das Auflageelement der ersten Befestigungsvorrichtung in etwa einem spitzen Winkel zur Basis der ersten Befestigungsvorrichtung angeordnet ist. Dies führt einerseits zu einer kostengünstigen Herstellung und andererseits können verschieden dimensionierte Stromschienen über diese Befestigungsvorrichtung abstützend aufgenommen werden.

Ebenfalls vorteilhaft beim erfindungsgemäßen Stromschienensystem ist, dass die erste Befestigungsvorrichtung wenigstens ein, an der Basis und / oder der Aufnahmenut und / oder dem Auflageelement angeordnetes Dämpfungselement aufweist. Diese unterschiedlich dimensionierten Dämpfungselemente sind vorteilhafterweise so angeordnet bzw. ausgebildet, dass sie bei bestimmungsgemäßer Verwendung des erfindungsgemäßen Stromschienensystems einen direkten Kontakt der Stromschiene zum Befestigungssystem verhindern.

Ein weiterer Vorteil des erfindungsgemäßen Stromschienensystems besteht darin, dass die erste Befestigungsvorrichtung ein, wenigstens ein Justierelement aufweisendes, die zweite Befestigungsvorrichtung aufnehmendes, Aufnahmeelement aufweist. In dieser Ausführungsform ist das erfindungsgemäße Stromschienensystem äußert kompakt aufgebaut und lässt sich bei der Montage äußerst schnell und einfach montieren.

Ein weiterer Vorteil des erfindungsgemäßen Stromschienensystems besteht darin, dass das Auflageelement der ersten Befestigungsvorrichtung wenigstens eine Aussparung aufweist, in der eine Öffnung angeordnet ist. Neben der kompakten Bauweise der ersten Befestigungsvorrichtung ist es hierdurch vorteilhafterweise möglich, die Kriechstrecken entsprechend groß zu dimensionieren und die Befestigungsvorrichtung schnell sowie einfach an der Trägervorrichtung zu montieren.

Eine weitere vorteilhafte Ausgestaltung des erfindungsgemäßen Stromschienensystems ist so ausgebildet, dass an wenigstens einem Halteelement der ersten Befestigungsvorrichtung wenigstens ein Befestigungselement angeordnet ist. Durch diese vorteilhafte Ausgestaltung ist es möglich, bei dem erfindungsgemäßen Stromschienensystem die erforderlichen Abdeckelemente einfach und schnell zu fixieren.

Ebenfalls vorteilhaft bei dem erfindungsgemäßen Stromschienensystem ist, dass das Justierelement sowie das Aufnahmeelement der ersten Befestigungsvorrichtung von wenigstens einer Öffnung durchdrungen ist. Dies führt vorteilhafterweise dazu, dass die Montage des erfindungsgemäßen Stromschienensystems schnell und baustellengerecht möglich ist.

Die erste Befestigungsvorrichtung ist dabei vorteilhafterweise weiter so ausgebildet, dass sie über zwei in den entsprechenden Öffnungen anzuordnende Fixierelemente an der jeweiligen Trägervorrichtung stabil fixierbar ist. Das erfindungsgemäße Stromschienensystem ist vorteilhafterweise so ausgebildet, dass die zweite Befestigungsvorrichtung wenigstens einen von seiner Oberseite wegweisenden Steg aufweist. Durch diese vorteilhafte Ausgestaltung des erfindungsgemäßen Stromschienensystems kann einerseits verhindert werden, dass beispielsweise Niederschläge von der zweiten Befestigungsvorrichtung auf die Stromschiene einwirken und es wird weiterhin vorteilhafterweise erreicht, dass die Kriechstrecke zwischen der Stromschiene sowie der über das Befestigungssystem beabstandet angeordneten Trägervorrichtung entsprechend ausreichend lang dimensionierbar ist. Der Steg der zweiten Befestigungsvorrichtung weist dabei von der Oberseite eine Höhe von etwa 10 bis 100 mm, vorzugsweise 30 bis 70 mm auf.

Das erfindungsgemäße Stromschienensystem ist weiterhin vorteilhaft so ausgebildet, dass die zweite Befestigungsvorrichtung wenigstens einen, von seiner Oberseite wegweisenden, die Stromschiene wenigstens teilweise überdeckenden, Steg aufweist.

Ein weiterer Vorteil des erfindungsgemäßen Stromschienensystems besteht darin, dass die zweite Befestigungsvorrichtung wenigstens einen, von seiner Oberseite wegweisenden Haltesteg aufweist. In dieser vorteilhaften Ausgestaltung ist es möglich, dass die zwischen den Trägervorrichtungen des erfindungsgemäßen Stromschienensystems anzuordnenden Abdeckelemente an dem jeweiligen Haltesteg der zweiten Befestigungsvorrichtung anordenbar und / oder fixierbar sind.

In einer Ausgestaltung des erfindungsgemäßen Stromschienensystems weist die zweite Befestigungsvorrichtung an seiner, dem Steg gegenüberliegenden, freien Ende wenigstens ein Klemmelement auf. Durch diese vorteilhafte Ausgestaltung ist das erfindungsgemäße Stromschienensystem sehr schnell montierbar und die Stromschiene fixierbar.

Das erfindungsgemäße Stromschienensystem ist weiterhin so ausgebildet, dass die zweite Befestigungsvorrichtung wenigstens eine, am Klemmelement angeordnete, Wulst aufweist. Die Wulst ist dabei so dimensioniert in ihrer Länge bzw. in ihrem Querschnitt, dass die Kriechstrecke zwischen der Stromschiene und der Trägervorrichtung ausreichend lang ist. In einer ebenfalls vorteilhaften Ausgestaltung des erfindungsgemäßen Stromschienensystems weist die zweite Befestigungsvorrichtung an ihrer, der Wulst gegenüberliegenden, Seite des Klemmelements wenigstens ein Dämpfungselement auf. Dies führt vorteilhafterweise zu einer optimalen Fixierung der Stromschiene.

Ebenfalls vorteilhaft beim erfindungsgemäßen Stromschienensystem ist, dass die zweite Befestigungsvorrichtung wenigstens eine, das Justierelement der ersten Befestigungsvorrichtung aufnehmende, Aussparung aufweist. Hierdurch ist eine schnelle Montage des erfindungsgemäßen Stromschienensystems möglich.

Erfindungsgemäß sind der Steg und die Wulst des zweiten Befestigungselements voneinander beabstandet angeordnet. Dies führt zu einer optimalen Dimensionierung der Kriechstrecke zwischen der Stromschiene sowie der Trägervorrichtung bzw. den Fixierelementen. Weiterhin sind erfindungsgemäß der Steg und die Wulst etwa parallel zueinander angeordnet sind.

Weiterhin vorteilhaft beim erfindungsgemäßen Stromschienensystem ist, dass die Befestigungsvorrichtung aus einem ungesättigten Polyesterharz mit einer Wärmeformbeständigkeit von wenigstens 200 °C nach EN ISO 75-2 hergestellt ist. Hierdurch ist bei bestimmungsgemäßem Einsatz des erfindungsgemäßen Stromschienensystems gesichert, dass die Befestigungsvorrichtung nicht durch thermische Beanspruchung einer erwärmten Stromschiene geschädigt ist.

Ebenso vorteilhaft beim erfindungsgemäßen Stromschienensystem ist, dass die Befestigungsvorrichtung aus einem ungesättigten Polyesterharz mit einer Kriechwegbildung von etwa CTI 600 gemäß IEC 60112 hergestellt ist. Durch diese vorteilhaften CTI- Werte weist das erfindungsgemäße Stromschienensystem sowie insbesondere die Befestigungsvorrichtung überraschend eine sehr niedrige Kriechwegbildung gemäß IEC 60112 auf.

Ebenfalls vorteilhaft beim erfindungsgemäßen Stromschienensystem ist, dass das Material der Befestigungsvorrichtung eine Durchschlagsspannung von wenigstens 40 kV sowie eine Durchschlagsfestigkeit von wenigstens 10 kV / mm nach ASTM D 149 aufweist. Hierdurch können erfindungsgemäße Stromschienensysteme zur Verfügung gestellt werden, die alle elektrischen Anforderungen insbesondere an die Kriechstrecken bzw. die Luftstrecken vollumfänglich realisieren.

Es hat sich weiterhin als vorteilhaft herausgestellt bei dem erfindungsgemäßen Stromschienensystem, dass das Material der Befestigungsvorrichtung wenigstens 30 % Glasfasern gemäß EN ISO 1172 aufweist. Hierdurch können erfindungsgemäße Stromschienensysteme zur Verfügung gestellt werden, bei denen das Befestigungssystem einen Zug-E-Modul von wenigstens 13 GPa sowie eine Zugfestigkeit von wenigstens 100 MPa gemäß EN ISO 527-4 aufweisen.

Ein weiterer Vorteil des erfindungsgemäßen Stromschienensystems besteht darin, dass die Befestigungsvorrichtungen des Befestigungssystems eine Biegefestigkeit von wenigstens 180 MPa sowie einen Biege-E-Modul von wenigstens 10 GPa gemäß EN ISO 14125 aufweisen.

Ebenfalls vorteilhaft beim erfindungsgemäßen Stromschienensystem ist, dass das Material der Befestigungsvorrichtung des Befestigungssystems einen spezifischen Durchgangswiderstand von etwa 10¹² Ohm x cm gemäß IEC 60093 sowie einen spezifischen Oberflächenwiderstand von etwa 10¹² Ohm gemäß IEC 60093 aufweist.

Das erfindungsgemäße Stromschienensystem ist so ausgebildet, dass die Trägervorrichtung eine Basis sowie ein daran angeordnetes Trägerelement aufweist. Hierdurch ist eine einfache und kostengünstige Herstellung des Stromschienensystems sowie auch eine einfache, baustellengerechte und kompakte Bauweise realisierbar.

Dabei hat es sich weiterhin als vorteilhaft herausgestellt, dass das Trägerelement der Trägervorrichtung wenigstens ein, etwa horizontal angeordnetes, Positionierelement aufweist. Durch diese vorteilhafte Ausgestaltung des erfindungsgemäßen Stromschienensystems ist eine einfache sowie baustellengerechte Montage möglich und es sind toleranzbedingte Höhenunterschiede der zu montierenden Stromschiene über das Positionierelement schnell und problemlos ausgleichbar.

Eine weitere vorteilhafte Ausgestaltung des erfindungsgemäßen Stromschienensystems ist so ausgebildet, dass das Trägerelement der Trägervorrichtung wenigstens zwei voneinander beabstandet angeordnete, als Langlöcher ausgebildete, Öffnungen aufweist. Durch diese vorteilhafte Ausgestaltung ist es wiederum möglich, toleranzbedingte Höhenunterschiede bei den zu montierenden Stromschienen schnell und sicher auszugleichen sowie das Stromschienensystem einfach zu montieren.

Dabei hat es sich als sehr vorteilhaft herausgestellt, dass das Positionierelement wenigstens eine etwa horizontal angeordnete Vertiefung bzw. Erhöhung aufweist. Diese vorteilhafte Ausgestaltung insbesondere, dass die Vertiefung bzw. die Erhöhung des Positionierelements im Querschnitt etwa rund, halbrund, dreieckig, viereckig, prismatisch, sägezahnförmig und dergleichen ausgebildet sind, führt zu einer optimalen Montage insbesondere bei toleranzbedingten Höhenunterschieden des zu montierenden Stromschienensystems.

Dabei lässt sich das erfindungsgemäße Stromschienensystem weiterhin so ausbilden, dass die dem Trägerelement der Trägervorrichtung zugeordnete Seite der Basis des ersten Befestigungselements wenigstens ein Positionierelement aufweist. In einer weiteren vorteilhaften Ausgestaltung des erfindungsgemäßen Stromschienensystems weist die den Halteelementen des ersten Befestigungselements gegenüberliegend angeordneten Seiten des Trägerelements wenigstens ein Positionierelement auf.

Es liegt weiterhin im Rahmen der Erfindung, dass die dem Trägerelement gegenüberliegend angeordneten Halteelemente der ersten Befestigungsvorrichtung wenigstens ein Positionierelement aufweisen. Durch diese vorteilhafte Ausgestaltung ist das erfindungsgemäße Stromschienensystem an alle Montageanforderungen insbesondere an toleranzbedingte Höhenunterschiede jederzeit einfach und schnell anpassbar. Dabei hat es sich auch als vorteilhaft herausgebildet, dass die als Langloch ausgebildeten Öffnungen des Trägerelements im Bereich der Positionierelemente angeordnet sind.

In einer weiteren vorteilhaften Ausgestaltung des erfindungsgemäßen Stromschienensystems ist dieses so ausgebildet, dass das in der Aufnahmenut des ersten Befestigungselements angeordnete Dämpfungselement den Profilfuß der Stromschiene umgreift. Hierdurch ist einerseits das Einsetzen der zu montierenden Stromschiene in die Aufnahmenut des ersten Befestigungselementes sehr einfach möglich und bei bestimmungsgemäßer Verwendung des erfindungsgemäßen Stromschienensystems erfolgt nahezu kein Verschleiß am Profilfuß der Stromschiene.

Das erfindungsgemäße Stromschienensystem zeichnet sich weiterhin dadurch aus, dass die Distanz zwischen dem in der Öffnung der Aussparung der ersten Befestigungsvorrichtung angeordneten Fixierelement zur Stromschiene wenigstens 40 mm beträgt. Durch diese vorteilhafte geometrische Ausgestaltung kann ein erfindungsgemäßes Stromschienensystem zur Verfügung gestellt werden, bei dem das Befestigungssystem eine Luftstrecke von wenigstens 40 mm aufweist. Ein weiterer Vorteil des erfindungsgemäßen Stromschienensystems ist, dass die Distanz von dem in der Öffnung der Aussparung der zweiten Befestigungsvorrichtung angeordneten Fixierelementes zur Stromschiene wenigstens 40 mm beträgt.

Vorteilhaft beim erfindungsgemäßen Stromschienensystem ist weiterhin, dass die Distanz vom Profilfuß der Stromschiene zu den Halteelementen der ersten Befestigungsvorrichtung wenigstens 50 mm beträgt. Durch die konstruktive Dimensionierung insbesondere der ersten Befestigungsvorrichtung sind somit Kriechstrecken von wenigstens 60 mm sowie Luftstrecke von wenigstens 40 mm bei diesem erfindungsgemäßen Stromschienensystem realisierbar.

Das erfindungsgemäße Stromschienensystem ist vorteilhafterweise so ausgebildet, dass das Befestigungssystem so dimensioniert ist, dass es eine Kriechstrecke gemäß EN 50124-1 von wenigstens 60 mm aufweist. Hierdurch kann ein erfindungsgemäßes Stromschienensystem zur Verfügung gestellt werden, dass allen elektrischen Anforderungen insbesondere auch an die Kriechstrecken gerecht ist.

Ein weiterer Vorteil des erfindungsgemäßen Stromschienensystems ist, dass das Befestigungssystem so dimensioniert ist, dass es eine Luftstrecke gemäß EN 50124-1 von wenigstens 40 mm aufweist.

Weiterhin ist das erfindungsgemäße Stromschienensystem so ausgebildet, dass im Profilsteg der Stromschiene wenigstens eine, diesen durchdringende, Öffnung angeordnet ist. Vorteilhafterweise können somit erfindungsgemäße Stromschienensysteme zur Verfügung gestellt werden, bei denen insbesondere bei Niederschlägen sich in der horizontal angeordneten Stromschiene im Profilsteg ansammelnde Niederschläge über derartige Öffnungen abfließen können. Es hat sich weiterhin als vorteilhaft herausgestellt, dass die den Profilsteg der Stromschiene durchdringenden Öffnungen in bestimmten regelmäßigen bzw. unregelmäßigen Abständen voneinander angeordnet sind.

Ein weiterer Vorteil des erfindungsgemäßen Stromschienensystems besteht darin, dass die Aufnahmenut der ersten Befestigungsvorrichtung eine Tiefe von etwa 10 bis 80 mm, bevorzugt 10 bis 50 mm aufweist. Hierdurch ist es möglich, erfindungsgemäße Stromschienensysteme mit unterschiedlich dimensionierten Stromschienen zur Verfügung zu stellen.

Ebenfalls vorteilhaft beim erfindungsgemäßen Stromschienensystem ist, dass die Aufnahmenut der ersten Befestigungsvorrichtung eine Breite von etwa 10 bis 60 mm, bevorzugt 15 bis 45 mm aufweist.

Weiterhin vorteilhaft beim erfindungsgemäßen Stromschienensystem ist, dass die zweite Befestigungsvorrichtung über wenigstens in Sicherungselement kraftschlüssig an dem Aufnahmeelement der ersten Befestigungsvorrichtung über ein Fixierelement befestigt ist.

Die Erfindung betrifft weiterhin ein Stromschienensystem, welches sich dadurch auszeichnet, dass von der über das Befestigungssystem an der Trägervorrichtung fixierten Stromschiene eine, über ein weiteres Befestigungssystem mit der Trägervorrichtung fixierbar, beabstandet angeordnete, Stromschiene befestigt ist.

Weiterhin betrifft die Erfindung ein Stromschienensystem, welches vorteilhafterweise so ausgebildet ist, dass an der Trägervorrichtung eine, über ein weiteres Befestigungssystem fixierte, beabstandet angeordnete, Stromschiene befestigt ist.

Die Erfindung soll nun an diesen nicht einschränkenden Ausführungsbeispielen näher beschrieben werden.

Es zeigen.
- Fig. 1:: perspektivische Darstellung eines erfindungsgemäßen Stromschienensystems;
- Fig. 2:: Seitenansicht eines weiteren erfindungsgemäßen Stromschienensystems;
- Fig. 3:: perspektivische Explosionsdarstellung eines erfindungsgemäßen Stromschienensystems;
- Fig. 4:: perspektivische Darstellung der ersten Befestigungsvorrichtung des erfindungsgemäßen Stromschienensystems;
- Fig. 5:: perspektivische Darstellung der zweiten Befestigungsvorrichtung des erfindungsgemäßen Stromschienensystems.

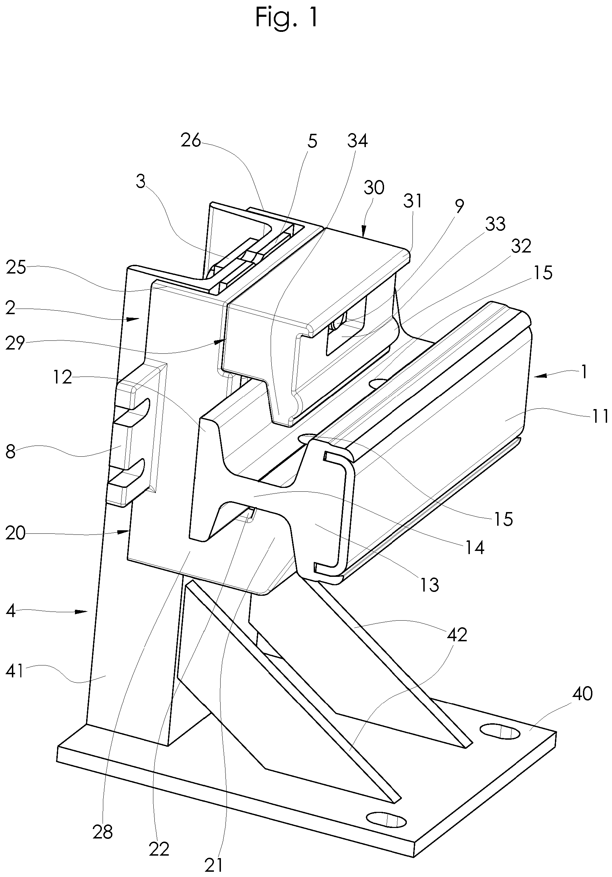

In der Fig. 1 ist eine perspektivische Darstellung eines erfindungsgemäßen Stromschienensystems dargestellt.

Das Stromschienensystem umfasst eine Stromschiene 1, ein Befestigungssystem 2 mit einer ersten Befestigungsvorrichtung 20 sowie einer zweiten Befestigungsvorrichtung 30.

Weiterhin ist eine Trägervorrichtung 4 dargestellt, wobei das Befestigungssystem 2 an der Trägervorrichtung 4, wenigstens die Stromschiene 1 aufnehmend, fixiert ist. Die erste Befestigungsvorrichtung 20 sowie die zweite Befestigungsvorrichtung 30 des Befestigungssystems 2 sind aus einem nicht elektrisch leitfähigen Material hergestellt.

Die erste Befestigungsvorrichtung 20 ist so ausgebildet, dass sie eine Basis 28 mit zwei daran, einander gegenüberliegend, angeordneten Halteelementen 25, 26 aufweist, die die Trägervorrichtung 4 vollflächig haltend umgreifen. Die erste Befestigungsvorrichtung 20 ist weiterhin so ausgebildet, dass sie ein, über eine Aufnahmenut 22 von der Basis 28 beabstandet angeordnete Stromschiene 2 wenigstens teilweise abstützendes, Auflageelement 21 aufweist. Die erste Befestigungsvorrichtung 20 ist vorteilhafterweise so ausgebildet, dass sie eine Höhe aufweist, die etwa der doppelten Breite der Stromschiene 1 entspricht.

Die Stromschiene 1 des Stromschienensystems ist so ausgebildet, dass sie ein Basisprofil 10 aufweist, welches einen Profilfuß 12 sowie einen Profilkopf 13 aufweist, welche über den Profilsteg 14 miteinander verbunden sind. Im Profilkopf 13 der Stromschiene 1 ist in diesem Ausführungsbeispiel ein Gleitflächenprofil 11 angeordnet. Die Stromschiene 1 ist weiterhin so ausgebildet, dass im Profilsteg 14 Öffnungen 15 angeordnet sind, welche den Profilsteg 12 durchdringen.

Die Stromschiene 1 ist über den Profilfuß 12 in der Aufnahmenut 22 der ersten Befestigungsvorrichtung so angeordnet, dass das Auflageelement 21 der ersten Befestigungsvorrichtung 20 den Profilsteg 14 der Stromschiene 1 abstützend untergreift.

An dem, der Aufnahmenut 22 gegenüberliegend angeordneten, freien Ende der Basis 28 der ersten Befestigungsvorrichtung 20 ist ein Aufnahmeelement 29 angeordnet, welches die zweite Befestigungsvorrichtung 30 aufnimmt.

Die zweite Befestigungsvorrichtung 30 weist einen von der Oberseite wegragenden Steg 31 auf. Weiterhin ist die zweite Befestigungsvorrichtung 30 so ausgebildet, dass sie an der dem Steg 31 gegenüberliegenden freien Ende wenigstens ein Klemmelement 34 aufweist.

Die zweite Befestigungsvorrichtung 30 ist weiter so ausgebildet, dass sie am Klemmelement 34 eine Wulst 32 aufweist. Die Wulst 32 der zweiten Befestigungsvorrichtung 30 ist dabei so ausgebildet, dass sie in etwa parallel und beabstandet zu dem an der Oberseite wegragenden Steg 31 der zweiten Befestigungsvorrichtung 30 angeordnet ist.

Zwischen dem Steg 31 und der Wulst 32 der zweiten Befestigungsvorrichtung 30 ist eine Aussparung 33 angeordnet, durch die ein Fixierelement 9 die zweite Befestigungsvorrichtung 30 über das Aufnahmeelement 29 mit der ersten Befestigungsvorrichtung 20 an der Trägervorrichtung 4 fixiert.

Die Trägervorrichtung 4 des erfindungsgemäßen Stromschienensystems ist so ausgebildet, dass sie eine Basis 40 aufweist, an der ein Trägerelement 41 orthogonal angeordnet ist. Das Trägerelement 41 der Trägervorrichtung 4 ist in diesem Ausführungsbeispiel über zwei Versteifungselemente 42 mit der Basis 40 verbunden.

Die erste Befestigungsvorrichtung 20 weist an ihren Halteelementen 25, 26 ein Befestigungselement 8 auf, welches orthogonal zum Halteelement 25, 26 angeordnet ist. Das Halteelement 25, 26 der ersten Befestigungsvorrichtung 20 weist in diesem Ausführungsbeispiel eine Höhe auf, die etwa der doppelten Breite des Profilfußes 12 der Stromschiene 1 entspricht. Weiterhin ist das Auflageelement 21 der ersten Befestigungsvorrichtung 20 in etwa einem spitzen Winkel zur Basis 28 angeordnet.

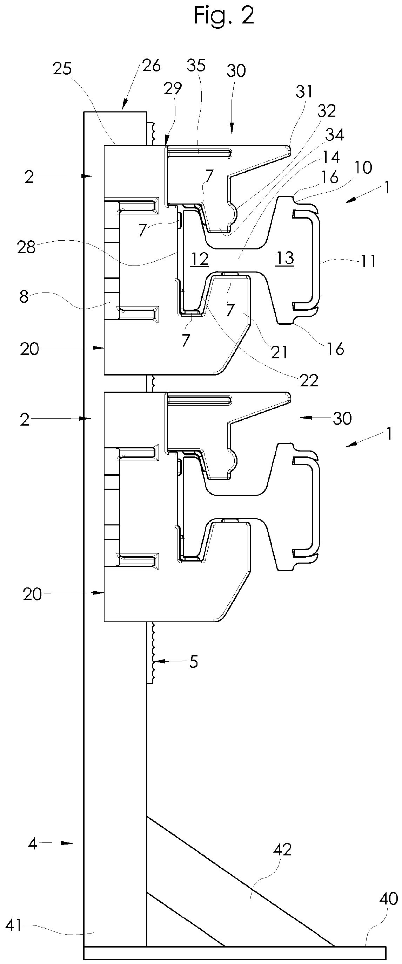

In der Fig. 2 ist die Seitenansicht eines weiteren erfindungsgemäßen Stromschienensystems dargestellt.

Das Stromschienensystem zeichnet sich dadurch aus, dass von der über das Befestigungssystem 2 an der Trägervorrichtung 4 fixierten, Stromschiene 1 eine, über ein weiteres Befestigungssystem 2 mit der Trägervorrichtung 4 fixierte, beabstandet angeordnete, Stromschiene 1 befestigt ist. Die übereinander angeordneten Befestigungssysteme 2 weisen jeweils eine erste Befestigungsvorrichtung 20 sowie eine daran angeordnete zweite Befestigungsvorrichtung 30 auf.

Die Befestigungssysteme 2 sowie die Stromschiene 1 sind in diesem Ausführungsbeispiel identisch ausgebildet, sodass beispielhaft an dem, am oberen freien Ende der Trägervorrichtung 4 angeordneten, Befestigungssystem 2 die Details beschrieben werden. Die erste Befestigungsvorrichtung 20 sowie die zweite Befestigungsvorrichtung 30 sind jeweils aus einem nicht elektrisch leitfähigen Material hergestellt.

Die erste Befestigungsvorrichtung 20 weist eine Basis 28 mit zwei daran, einander gegenüberliegend angeordneten Halteelementen 25, 26 auf, die die Trägervorrichtung 4 vollflächig haltend umgreifen. In diesem Ausführungsbeispiel ist die erste Befestigungsvorrichtung 20 so ausgebildet, dass die zwei, daran einander gegenüberliegend, angeordneten Halteelemente 25, 26 das Trägerelement 41 der Trägervorrichtung 4 vollflächig haltend umgreifen.

Die erste Befestigungsvorrichtung 20 ist so ausgebildet, dass sie ein, über eine Aufnahmenut 22 von der Basis 28 beabstandet angeordnetes, die Stromschiene 1 wenigstens teilweise abstützendes, Auflageelement 21 aufweist. Das Auflageelement 21 der ersten Befestigungsvorrichtung 20 ist in diesem Ausführungsbeispiel in etwa einem spitzen Winkel zur Basis 28 der ersten Befestigungsvorrichtung 20 angeordnet. Weiterhin ist die erste Befestigungsvorrichtung 20 so ausgebildet, dass sie ein an der Basis 28, der Aufnahmenut 22 sowie dem Aufnahmeelement 21 angeordnetes Dämpfungselement 7 aufweist.

Die erste Befestigungsvorrichtung 20 ist weiterhin so ausgebildet, dass wenigstens ein Halteelement 25, 26 der ersten Befestigungsvorrichtung 20 wenigstens ein Befestigungselement 8 aufweist. In diesem Ausführungsbeispiel ist das Befestigungselement 8 orthogonal am Halteelement 25, 26 der zweiten Befestigungsvorrichtung 20 angeordnet.

An dem, der Aufnahmenut 22 gegenüberliegend angeordneten, freien Ende der Basis 28 der ersten Befestigungsvorrichtung 20 ist ein Aufnahmeelement 29 angeordnet, welches die zweite Befestigungsvorrichtung 30 aufnimmt. Die zweite Befestigungsvorrichtung 30 ist so ausgebildet, dass sie einen von der Oberseite wegweisenden Steg 31 aufweist. In diesem Ausführungsbeispiel weist die zweite Befestigungsvorrichtung 30 einen von der Oberseite wegweisenden, die Stromschiene 1 wenigstens teilweise überdeckenden Steg 31 auf.

Beanstandet zum Steg 31 der zweiten Befestigungsvorrichtung 30 ist eine Wulst 32 angeordnet, die am Klemmelement 34 der zweiten Befestigungsvorrichtung 30, etwa parallel zum Steg 31 und von diesem beabstandet angeordnet ist.

Die Stromschiene 1 weist ein Basisprofil 10 auf, welches einen Profilfuß 12 sowie einen Profilkopf 13 umfasst, die durch den Profilsteg 14 miteinander verbunden sind. Am Profilkopf des Basisprofils 10 ist ein Gleitflächenprofil 11 angeordnet. Weiterhin ist das Basisprofil 10 der Stromschiene 1 so ausgebildet, dass am Profilkopf 13 jeweils zwei, einander gegenüberliegend angeordnete Verdickungen 16 angeordnet sind.

Die zweite Befestigungsvorrichtung 30 ist weiterhin so ausgebildet, dass an dem, der Wulst 32 gegenüberliegenden, Ende des Klemmelements 34 ein Dämpfungselement 7 angeordnet ist, welches den Profilfuß 12 der Stromschiene 1 wenigstens teilweise umgreift.

Das erfindungsgemäße Stromschienensystem weist weiterhin eine Trägervorrichtung 4 auf, welche eine Basis 40 umfasst, sowie ein an der Basis 40 angeordnetes Trägerelement 41.

Das Trägerelement 41 ist in diesem Ausführungsbeispiel orthogonal an der Basis 40 angeordnet und über ein Versteifungselement 42 mit dieser stoffschlüssig verbunden. Die Trägervorrichtung 4 des erfindungsgemäßen Stromschienensystems ist weiterhin so ausgebildet, dass das Trägerelement 41 an seiner dem ersten Befestigungselement 20 gegenüberliegenden Seite Positionierelemente 5 aufweist.

Das Positionierelement 5 des Trägerelements 41 der Trägervorrichtung 4 ist dabei als etwa horizontal angeordnete Vertiefung bzw. Erhöhung ausgebildet. Durch diese vorteilhafte Ausgestaltung des erfindungsgemäßen Stromschienensystems ist es möglich, toleranzbedingte Abweichungen der Stromschiene 1 sowie die Positionierung der unteren Stromschiene 1 zur oberen Stromschiene 1 über das Befestigungssystem 2 mithilfe der Positionierelemente 5 in der Höhe zu realisieren. Es liegt jedoch auch im Rahmen der Erfindung, dass die dem Trägerelement 41 der Trägervorrichtung 4 gegenüberliegend angeordnete Innenseite der Basis 28 der ersten Befestigungsvorrichtung 20 ebenfalls derartige, hier nicht dargestellte, Positionierelemente 5 aufweist.

Die erste Befestigungsvorrichtung 20 und die zweite Befestigungsvorrichtung 30 sind in diesem Ausführungsbeispiel aus einem ungesättigten Polyesterharz hergestellt mit einer Wärmeformbeständigkeit von etwa 200 °C nach EN ISO 75-2. Weiterhin weist der Werkstoff der ersten Befestigungsvorrichtung 20 und der zweiten Befestigungsvorrichtung 30 eine Kriechwegbildung von etwa CTI 600 gemäß IEC 60112 auf.

Das Stromschienensystem ist vorteilhafterweise so ausgebildet, dass die Distanz von dem in der Aussparung 33 der zweiten Befestigungsvorrichtung 30 angeordneten Fixierelement 9 zum Profilfuß 12 der Stromschiene 1 etwa 42 mm beträgt. Weiterhin ist das erfindungsgemäße Stromschienensystem so ausgebildet, dass die Distanz vom Profilfuß 12 der Stromschiene 1 zu den Halteelementen 25, 26 der ersten Befestigungsvorrichtung etwa 52 mm beträgt.

Das Befestigungssystem 2 des erfindungsgemäßen Stromschienensystems umfassend eine erste Befestigungsvorrichtung 20 sowie eine zweite Befestigungsvorrichtung 30 ist so dimensioniert, dass es eine Kriechstrecke gemäß EN 50124-1 von etwa 61 mm aufweist.

Weiterhin ist das Befestigungssystem 2 des erfindungsgemäßen Stromschienensystems so dimensioniert, dass es eine Luftstrecke gemäß EN 50124-1 von etwa 41 mm aufweist. Die Aufnahmenut 22 der ersten Befestigungsvorrichtung 20 weist in diesem Ausführungsbeispiel eine Tiefe von etwa 10 bis 80 mm, bevorzugt 10 bis 50 mm auf.

Die Breite der Aufnahmenut 22 der ersten Befestigungsvorrichtung 20 beträgt etwa 10 bis 60 mm, bevorzugt 15 bis 45 mm.

Das erfindungsgemäße Stromschienensystem ist dabei vorteilhafterweise so ausgebildet, dass die Distanz vom Profilsteg 14 der Stromschiene 1 über das Aufnahmeelement 21 der ersten Befestigungsvorrichtung 20 zum Halteelemente 25, 26 etwa 61 mm beträgt.

Das erfindungsgemäße Stromschienensystem ist weiterhin so dimensioniert, dass die Distanz zwischen der Stromschiene 1 über das Klemmelement 34, die Wulst 32 sowie den Steg 31 der zweiten Befestigungsvorrichtung 30 zum Halteelement 25, 26 der ersten Befestigungsvorrichtung 20 etwa 61 mm beträgt.

In diesem Ausführungsbeispiel weist die Stromschiene 1 eine Breite von etwa 60 bis 150 mm, bevorzugt 80 bis 120 mm auf.

Das am oberen freien Ende des Trägerelements 41 angeordnete Befestigungssystem 2 ist so fixiert, dass es mit seiner Unterseite unmittelbar an der Oberseite des direkt darunter angeordneten Befestigungssystems 2, welches der Basis 40 der Trägervorrichtung 4 gegenüberliegend angeordnet ist, fixiert ist.

Das erfindungsgemäße Stromschienensystem ist vorteilhafterweise so ausgebildet, dass der Abstand der einander gegenüberliegend, beabstandet angeordneten Stromschienen 1 vom Mittelpunkt der jeweiligen Stromschiene 1 etwa 150 bis 250 mm, bevorzugt 160 bis 220 mm beträgt.

Hierdurch können erfindungsgemäße Stromschienensysteme zur Verfügung gestellt werden, die den jeweiligen Anforderungen der elektrischen Bahnen, insbesondere des Abstands des der Stromschiene 1 gegenüberliegend positionierten Stromabnehmer jeweils in ihrer Höhe entsprechen.

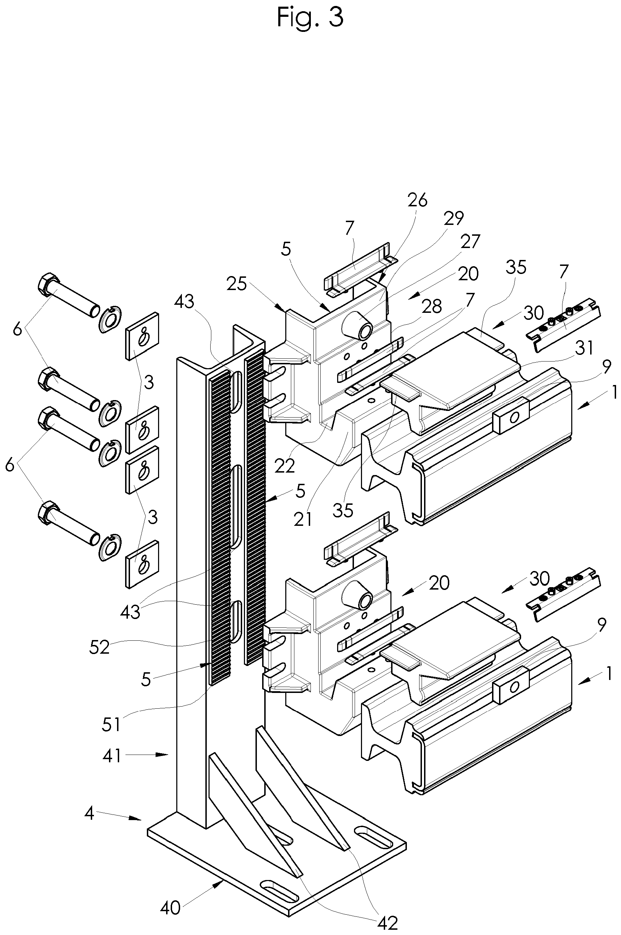

In der Fig. 3 ist eine perspektivische Explosionsdarstellung eines erfindungsgemäßen Stromschienensystems dargestellt.

Das Stromschienensystem umfasst in diesem Ausführungsbeispiel zwei Stromschienen 1, jeweils zwei Befestigungssysteme 2 mit jeweils einer ersten Befestigungsvorrichtung 20 sowie einer zweiten Befestigungsvorrichtung 30. Das Stromschienensystem umfasst weiter eine Trägervorrichtung 4, wobei das jeweilige Befestigungssystem 2 an der Trägervorrichtung 4, wenigstens eine Stromschiene 1 aufnehmend, fixiert ist. Die Befestigungsvorrichtung 20, 30 des Befestigungssystems 2 ist aus einem nicht elektrisch leitfähigen Material auf Basis eines ungesättigten Polyesterharzes hergestellt.

Das Stromschienensystem ist weiterhin so ausgebildet, dass von der über ein Befestigungssystem 2 an der Trägervorrichtung 4 fixierte Stromschiene 1 eine über ein weiteres Befestigungssystem 2 mit der Trägervorrichtung 4 fixierte, beabstandet angeordnete, Stromschiene 1 befestigbar ist.

Die zwei ersten Befestigungsvorrichtungen 20 weisen eine Basis 28 mit zwei daran, einander gegenüberliegend, angeordneten Halteelementen 25, 26 auf, die die Trägervorrichtung 4 vollflächig umgreift. Die jeweils erste Befestigungsvorrichtung 20 weist wenigstens ein, über eine Aufnahmenut 22 von der Basis 28 beabstandet angeordnetes, die Stromschiene 1 wenigstens teilweise abstützendes, Auflageelement 21 auf.

Weiterhin sind die ersten Befestigungsvorrichtungen 20 so ausgebildet, dass sie ein, wenigstens ein Justierelement 27 aufweisendes, die zweite Befestigungsvorrichtung 30 jeweils aufnehmendes, Aufnahmeelement 29 aufweisen.

Die an der Trägervorrichtung 4 angeordneten Befestigungssysteme 2 mit der jeweils fixierten Stromschiene 1 sind baugleich aufgebaut, sodass die weitere Beschreibung anhand des am freien, oberen Ende des Trägerelements 41 der Trägervorrichtung 4 angeordneten Befestigungssystems 2 erfolgt.

Das Auflageelement 21 der ersten Befestigungsvorrichtung 20 ist in diesem Ausführungsbeispiel in etwa einem spitzen Winkel zur Basis 28 angeordnet.

Weiterhin weist die erste Befestigungsvorrichtung 20 ein, an der Basis 28 und der Aufnahmenut 22 und dem Auflageelement 21 angeordnetes Dämpfungselement 7 auf.

Die Trägervorrichtung 4 des erfindungsgemäßen Stromschienensystems ist so ausgebildet, dass sie eine Basis 40 aufweist an der ein Trägerelement 41 angeordnet ist. Das Trägerelement 41 der Trägervorrichtung 4 ist in diesem Ausführungsbeispiel orthogonal an der Basis 40 angeordnet und über zwei Versteifungselemente 42 mit dieser stoffschlüssig verbunden. An dem, der Basis 40 der Trägervorrichtung 4 gegenüberliegend angeordneten, freien Ende des Trägerelements 41 sind zwei, parallel nebeneinander angeordnete, Positionierelemente 5 angeordnet.

Das Positionierelement 5 des Trägerelements 41 der Trägervorrichtung 4 ist dabei als horizontal angeordnete Vertiefung 51 bzw. Erhöhung 52 ausgebildet und im Querschnitt etwa halbrund ausgebildet. Das Trägerelement 41 der Trägervorrichtung 4 ist weiterhin so ausgebildet, dass es drei voneinander beabstandet angeordnete, als Langlöcher ausgebildete, Öffnungen 43 aufweist.

Weiterhin ist das erfindungsgemäße Stromschienensystem so ausgebildet, dass die dem Trägerelement 41 der Trägervorrichtung 4 zugeordnete Seite der Basis 28 des ersten Befestigungselements 20 ebenfalls wenigstens ein Positionierelement 5 aufweist. Somit ist es durch das erfindungsgemäße Stromschienensystem möglich, die jeweilige erste Befestigungsvorrichtung 20, höhenvariabel am Trägerelement 41 der Trägervorrichtung 4 zu positionieren und über beispielsweise als Schrauben ausgebildete Sicherungselemente 6 zusammen mit dem Fixierelement 9 zu fixieren.

Es liegt jedoch auch im Rahmen der Erfindung, dass die, den Halteelementen 25, 26 der ersten Befestigungsvorrichtung 20 gegenüberliegend angeordneten, Seiten des Trägerelements 41 der Trägervorrichtung 4 wenigstens ein Positionierelement 5 aufweist. Es liegt weiterhin im Rahmen der Erfindung, dass die dem Trägerelement 41 der Trägervorrichtung 4 gegenüberliegend angeordneten Halteelemente 25, 26 der ersten Befestigungsvorrichtung 20 wenigstens ein Positionierelement 5 aufweisen.

Durch die nicht dargestellte Öffnung der ersten Befestigungsvorrichtung 20 ist diese am Trägerelement 41 der Trägervorrichtung 4 vorfixiert, sodass die Stromschiene 1 in die Aufnahmenut 22 eingelegt und auf das Auflageelement 21 aufsetzbar ist. In einem nächsten Arbeitsgang ist nun die zweite Befestigungsvorrichtung 30 so gegenüber der Basis 28 der ersten Befestigungsvorrichtung 20 anzuordnen, dass diese gegenüber dem an dem Aufnahmeelement 29 angeordneten Justierelement 27 positioniert und über ein weiteres Sicherungselement 6 an dem Auflageelement 29 der ersten Befestigungsvorrichtung 1 über ein Fixierelement 9 fixierbar ist.

Das erfindungsgemäße Stromschienensystem ist weiterhin so ausgebildet, dass die beispielsweise als Schrauben ausgebildeten Sicherungselemente 6 über je ein Distanzelement 3 vom Trägerelement 41 der Trägervorrichtung 4 beabstandet angeordnet sind. Die zweite Befestigungsvorrichtung 30 des erfindungsgemäßen Stromschienensystems ist so ausgebildet, dass sie einen von der Oberseite wegweisenden Steg 31 aufweist.

Weiterhin ist die zweite Befestigungsvorrichtung 30 so ausgebildet, dass sie zwei von der Oberseite wegweisende Haltestege 35 aufweist, die in diesem Ausführungsbeispiel an den Seiten einander gegenüberliegend, orthogonal zum Steg 31, angeordnet sind.

Das Trägerelement 41 der Trägervorrichtung 4 des erfindungsgemäßen Stromschienensystems ist so ausgebildet, dass die als Langloch ausgebildeten Öffnungen 43 im Bereich der Positionierelemente 5 angeordnet sind, in diesem Ausführungsbeispiel jeweils zwischen zwei einander gegenüberliegend angeordneten Positionierelementen 5.

Die erste Befestigungsvorrichtung 20 ist so ausgebildet, dass sie eine Höhe aufweist, die etwa der doppelten Breite der Stromschiene 1 entspricht. Weiterhin ist die erste Befestigungsvorrichtung 20 des Befestigungssystems 2 so ausgebildet, dass die Halteelemente 25, 26 der ersten Befestigungsvorrichtung 20 eine Höhe aufweisen, die etwa der doppelten Breite des Profilfußes 12 der Stromschiene 1 entspricht.

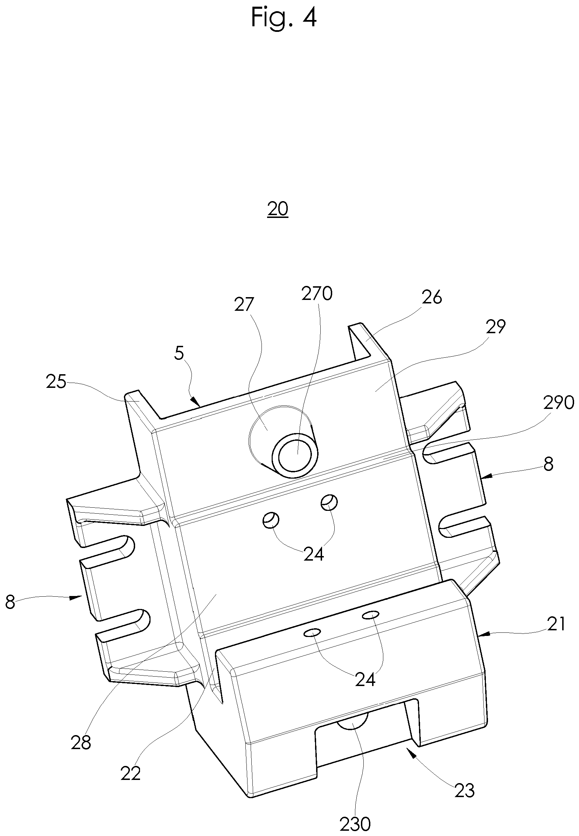

In der Fig. 4 ist eine perspektivische Darstellung der ersten Befestigungsvorrichtung 20 des Befestigungssystems 2 des erfindungsgemäßen Stromschienensystems dargestellt.

Die erste Befestigungsvorrichtung 20 weist eine Basis 28 mit zwei daran, einander gegenüberliegend, angeordneten Halteelementen 25, 26 auf, die bei bestimmungsgemäßer Verwendung, die nicht dargestellte Trägervorrichtung vollflächig haltend umgreifen.

Die erste Befestigungsvorrichtung 20 des Befestigungssystems 2 ist weiterhin so ausgebildet, dass sie wenigstens ein, über eine Aufnahmenut 22 von der Basis 28 beabstandet angeordnetes, eine Stromschiene wenigstens teilweise abstützendes, Auflageelement 21 aufweist. Das Auflageelement 21 der ersten Befestigungsvorrichtung 20 ist in etwa einem spitzen Winkel zur Basis 28 angeordnet.

Weiterhin weist die erste Befestigungsvorrichtung 20 Öffnungen 24 auf, in die bei bestimmungsgemäßer Verwendung die nicht dargestellten Dämpfungselemente einbringbar sind.

Die erste Befestigungsvorrichtung 20 ist so ausgebildet, dass sie ein, wenigstens ein Justierelement 27 aufweisendes, bei bestimmungsgemäßer Verwendung die zweite Befestigungsvorrichtung 30 aufnehmendes, Aufnahmeelement 29 aufweist. Das Justierelement 27 weist eine Öffnung 270 auf, durch die ein Sicherungselement einbringbar ist.

Das Justierelement 27 des Aufnahmeelements 29 ist in diesem Ausführungsbeispiel im Querschnitt als Kegelstumpf ausgebildet.

Das Aufnahmeelement 29 der ersten Befestigungsvorrichtung 20 ist durch eine Stufe 290 von etwa 5 mm von der Basis 28 rückversetzt angeordnet, welche die Kriechstrecke entsprechend verlängert. Die zweite Befestigungsvorrichtung 30 ist somit verdrehsicher sowie formschlüssig auf der Stufe 290 und am Aufnahmeelement 29 angeordnet.

Die erste Befestigungsvorrichtung 20 ist weiterhin so ausgebildet, dass an der hier nicht sichtbaren Hinterseite zwischen den Halteelementen 25, 26 jeweils horizontal angeordnete Positionierelemente 5 angeordnet sind.

Die erste Befestigungsvorrichtung 20 ist weiter so ausgebildet, dass das Auflageelement 21 wenigstens eine Aussparung 23 aufweist, in der die Öffnung 230 angeordnet ist. Bei bestimmungsgemäßer Verwendung der ersten Befestigungsvorrichtung 20 wird diese über ein nicht dargestelltes Sicherungselement 6 über die Öffnung 230 der Aussparung 23 an der nicht dargestellten Trägervorrichtung fixiert.

Die erste Befestigungsvorrichtung 20 ist ebenfalls so ausgebildet, dass an wenigstens einem Halteelemente 25, 26 jeweils ein Befestigungselement 8 angeordnet ist. Die erste Befestigungsvorrichtung 20 ist so ausgebildet und dimensioniert, dass sie eine Durchschlagsspannung von wenigstens 40 kV sowie eine Durchschlagsfestigkeit von wenigstens 10 kV / mm nach ASTM D 149 aufweist.

Das Material der ersten Befestigungsvorrichtung 20 weist in diesem Ausführungsbeispiel einen spezifischen Durchgangswiderstand von etwa 10¹² Ohm x cm gemäß IEC 60093 sowie einen spezifischen Oberflächenwiderstand von etwa 10¹² Ohm gemäß IEC 60093 auf.

Die Aufnahmenut 22 der ersten Befestigungsvorrichtung 20 weist in diesem Ausführungsbeispiel eine Tiefe von etwa 10 bis 80 mm, bevorzugt 10 bis 50 mm auf. Weiterhin ist die Aufnahmenut 22 der ersten Befestigungsvorrichtung 20 so ausgebildet, dass sie eine Breite von etwa 10 bis 60 mm, bevorzugt 15 bis 45 mm aufweist.

Das Halteelement 25, 26 der ersten Befestigungsvorrichtung weist in diesem Ausführungsbeispiel eine Breite von etwa 40 bis 80 mm, bevorzugt 50 bis 60 mm auf. Weiterhin ist das Halteelement 25, 26 der ersten Befestigungsvorrichtung 20 so ausgebildet, dass dieses eine Höhe von 90 bis 200 mm, bevorzugt 100 bis 150 mm aufweist.

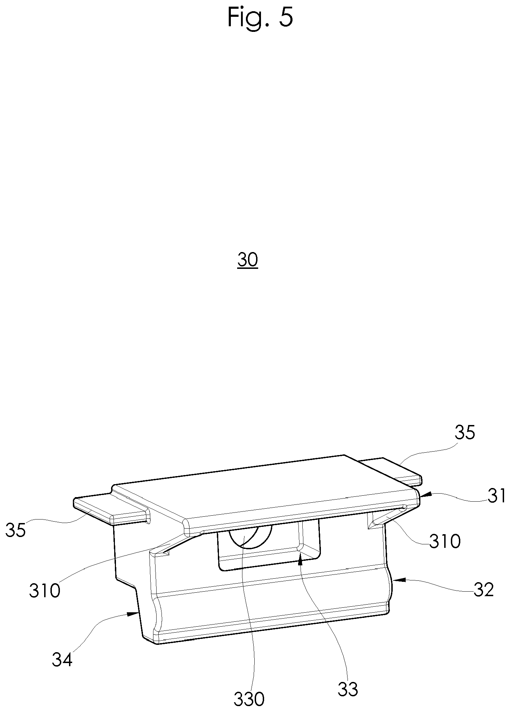

In der Fig. 5 ist eine perspektivische Darstellung der zweiten Befestigungsvorrichtung 30 des Befestigungssystems 2 des erfindungsgemäßen Stromschienensystems dargestellt.

Die zweite Befestigungsvorrichtung 30 weist wenigstens einen von seiner Oberseite wegragenden Steg 31 auf, der in diesem Ausführungsbeispiel durch Stegelemente 310 randseitig mit der Frontseite der zweiten Befestigungsvorrichtung 30 verbunden ist. Der Steg 31 ist dabei so ausgebildet, dass er bei bestimmungsgemäßer Verwendung im erfindungsgemäßen Stromschienensystem, die nicht dargestellte Stromschiene wenigstens teilweise überdeckt.

Die zweite Befestigungsvorrichtung 30 des Befestigungssystems 2 ist weiter so ausgebildet, dass sie jeweils an ihren Seiten einen Haltesteg 35 aufweist. Der Haltesteg 35 ist dabei rechtwinklig von der Seitenfläche der zweiten Befestigungsvorrichtung 30 wegweisend angeordnet.

Die zweite Befestigungsvorrichtung 30 ist weiterhin so ausgebildet, dass sie an dem, dem Steg 31 gegenüberliegend angeordneten, freien Ende eine Wulst 32 aufweist. Die Wulst 32 der zweiten Befestigungsvorrichtung 30 ist dabei im Querschnitt etwa halbrund ausgebildet.

In diesem Ausführungsbeispiel ist der Steg 31 sowie die Wulst 32 der zweiten Befestigungsvorrichtung 30 etwa parallel zueinander, beabstandet angeordnet. Die zweite Befestigungsvorrichtung 30 weist an seiner dem Steg 31 gegenüberliegenden freien Ende wenigstens ein Klemmelement 34 auf, wobei in diesem Ausführungsbeispiel am Klemmelement 34 die Wulst 32 angeordnet ist.

Die zweite Befestigungsvorrichtung 30 weist wenigstens eine, das nicht dargestellte Justierelement der ersten Befestigungsvorrichtung aufnehmende, in einer Aussparung 33 angeordnete Öffnung 330 auf. Bei bestimmungsgemäßer Verwendung des erfindungsgemäßen Stromschienensystems wird die zweite Befestigungsvorrichtung 30 über die Öffnung 330 in der Aussparung 33 an dem nicht dargestellten Justierelement 27 der ersten Befestigungsvorrichtung 20 positioniert und über ein nicht dargestelltes Sicherungselement, welches durch die Öffnung 270 des Justierelements 27 in der Öffnung 330 der zweiten Befestigungsvorrichtung 30 positioniert ist über das nicht dargestellte Fixierelement 9, welches in der Aussparung 33 angeordnet ist, fixiert.

Die zweite Befestigungsvorrichtung 30 ist so ausgebildet und dimensioniert, dass sie eine Durchschlagsspannung von wenigstens 40 kV sowie eine Durchschlagsfestigkeit von wenigstens 10 kV / mm nach ASTM D 149 aufweist.

Das Material der zweiten Befestigungsvorrichtung 30 weist in diesem Ausführungsbeispiel einen spezifischen Durchgangswiderstand von etwa 10¹² Ohm x cm gemäß IEC 60093 sowie einen spezifischen Oberflächenwiderstand von etwa 10¹² Ohm gemäß IEC 60093 auf.

Die zweite Befestigungsvorrichtung 30 wird bei bestimmungsgemäßer Verwendung des erfindungsgemäßen Stromschienensystems über wenigstens ein Sicherungselement 6 kraftschlüssig an dem Aufnahmeelement 29 der ersten Befestigungsvorrichtung 20 über das Fixierelement 9 befestigt. Das Fixierelement 9 ist dabei so ausgebildet, dass es in etwa die prismatische Geometrie der Aussparung 33 der zweiten Befestigungsvorrichtung 30 aufweist. Die zweite Befestigungsvorrichtung 30 ist so ausgebildet, dass sie eine prismatische, also etwa viereckige, Aussparung 33 mit einer Tiefe von etwa 10 bis 30 mm, bevorzugt 15 bis 25 mm aufweist. Die Aussparung 33 der zweiten Befestigungsvorrichtung 30 ist dabei in der Tiefe, der Fläche sowie dem Querschnitt in etwa gleich zur Aussparung 23 der ersten Befestigungsvorrichtung 20 ausgebildet.

## Patentansprüche

1. Stromschienensystem umfassend wenigstens eine Stromschiene (1), wenigstens ein Befestigungssystem (2) mit einer ersten Befestigungsvorrichtung (20) sowie einer zweiten Befestigungsvorrichtung (30), wenigstens einer Trägervorrichtung (4), wobei das Befestigungssystem (2) an der Trägervorrichtung (4), wenigstens eine Stromschiene (1) aufnehmend, fixierbar ist, wobei die Befestigungsvorrichtungen (20, 30) des Befestigungssystems (2) aus einem nicht elektrisch leitfähigen Material hergestellt sind, wobei die erste Befestigungsvorrichtung (20) eine Basis (28) mit zwei daran, einander gegenüberliegend, angeordneten Halteelementen (25, 26) aufweist, wobei die erste Befestigungsvorrichtung (20) wenigstens ein, über eine Aufnahmenut (22) von der Basis (28) beabstandet angeordnetes, die Stromschiene (1) wenigstens teilweise abstützendes, Auflageelement (21) aufweist und wobei die erste Befestigungsvorrichtung (20) eine Höhe aufweist, die etwa der doppelten Breite der Stromschiene (1) entspricht, wobei die Trägervorrichtung (4) eine Basis (40) aufweist, die mit einem Trägerelement (41) der Trägervorrichtung (4) orthogonal verbunden ist, **dadurch gekennzeichnet, dass** die zwei an der Basis (28) der ersten Befestigungsvorrichtung (20), einander gegenüberliegend, angeordneten Halteelemente (25, 26) das Trägerelement (41) der Trägervorrichtung (4) vollflächig haltend umgreifen, dass die zweite Befestigungsvorrichtung (30) wenigstens einen von seiner, dem oberen freien Ende des Trägerelementes (41) gegenüberliegend angeordneten, Oberseite wegweisenden Steg (31) aufweist, dass die zweite Befestigungsvorrichtung (30) an ihrer dem Steg (31) gegenüberliegendem freien Ende wenigstens ein Klemmelement (34) und am Klemmelement (34) eine Wulst (32) aufweist, dass sich Steg (31), Klemmelement (34) und Wulst (32) jeweils über die gesamte Breite der zweiten Befestigungsvorrichtung (30) erstrecken, dass die Wulst (32) in etwa parallel und beabstandet zu dem Steg (31) angeordnet ist, und dass zwischen dem Steg (31) und der Wulst (32) eine Aussparung (33) angeordnet ist, durch die ein Fixierelement (9) die zweite Befestigungsvorrichtung (30) über ein Aufnahmeelement (29) mit der ersten Befestigungsvorrichtung (20) an der Trägervorrichtung (4) fixiert.

2. Stromschienensystem nach Anspruch 1, **dadurch gekennzeichnet, dass** die Distanz zwischen der Stromschiene (1) über das Klemmelement (34), die Wulst (32) sowie den Steg (31) der zweiten Befestigungsvorrichtung (30) zum Halteelement (25, 26) der ersten Befestigungsvorrichtung (20) etwa 61 mm beträgt.

3. Stromschienensystem nach einem der vorhergehenden Ansprüche, **dadurch gekennzeichnet, dass** die Halteelemente (25, 26) der ersten Befestigungsvorrichtung (20) eine Höhe aufweisen, die etwa der doppelten Breite des Profilfußes (12) der Stromschiene (1) entspricht.

4. Stromschienensystem nach einem der vorhergehenden Ansprüche, **dadurch gekennzeichnet, dass** das Auflageelement (21) in etwa einem spitzen Winkel zur Basis (28) der ersten Befestigungsvorrichtung (20) angeordnet ist.

5. Stromschienensystem nach einem der vorhergehenden Ansprüche, **dadurch gekennzeichnet, dass** die erste Befestigungsvorrichtung (20) ein, wenigstens ein Justierelement (27) aufweisendes, die zweite Befestigungsvorrichtung (30) aufnehmendes, Aufnahmeelement (29) aufweist.

6. Stromschienensystem nach einem der vorhergehenden Ansprüche, **dadurch gekennzeichnet, dass** der wenigstens eine Steg (31) die Stromschiene (1) wenigstens teilweise überdeckt.

7. Stromschienensystem nach einem der vorhergehenden Ansprüche, **dadurch gekennzeichnet, dass** die dem Trägerelement (41) der Trägervorrichtung (4) zugeordnete Seite der Basis (28) des ersten Befestigungselements (20) wenigstens ein Positionierelement (5) aufweist.

8. Stromschienensystem nach einem der vorhergehenden Ansprüche, **dadurch gekennzeichnet, dass** das Trägerelement (41) der Trägervorrichtung (4) wenigstens zwei, voneinander beabstandet angeordnete, als Langlöcher ausgebildete, Öffnungen (43) aufweist.

9. Stromschienensystem nach einem der vorhergehenden Ansprüche, **dadurch gekennzeichnet, dass** in der Aufnahmenut (22) der ersten Befestigungsvorrichtung (20) ein Dämpfungselement (7) angeordnet ist, welches den Profilfuß (12) der Stromschiene (1) umgreift.

10. Stromschienensystem nach einem der vorhergehenden Ansprüche, **dadurch gekennzeichnet, dass** am Klemmelement (34) der zweiten Befestigungsvorrichtung (30) ein Dämpfungselement (7) angeordnet ist, welches den Profilfuß (12) der Stromschiene (1) umgreift.

11. Stromschienensystem nach einem der vorhergehenden Ansprüche, **dadurch gekennzeichnet, dass** von der, über das Befestigungssystem (2) an der Trägervorrichtung (4) fixierten Stromschiene (1) eine, über ein weiteres Befestigungssystem (2) mit der Trägervorrichtung (4) fixierbare, beabstandet angeordnete, Stromschiene (1) befestigt ist.

## Claims

1. Busbar system, comprising at least one busbar (1), at least one fastening system (2) having a first fastening device (20) and a second fastening device (30), at least one carrier device (4), wherein the fastening system (2) can be fixed to the carrier device (4) in such a manner that it receives at least one busbar (1), wherein the fastening devices (20, 30) of the fastening system (2) are produced from a non-electrically conductive material, wherein the first fastening device (20) has a base (28) with two holding elements (25, 26) arranged opposite one another thereon, wherein the first fastening device (20) has at least one supporting element (21) which is arranged spaced apart from the base (28) by way of a receiving groove (22) and at least partly supports the busbar (1), and wherein the first fastening device (20) has a height which corresponds to approximately twice the width of the busbar (1), wherein the carrier device (4) has a base (40) which is connected orthogonally to a carrier element (41) of the carrier device (4), **characterised in that** the two holding elements (25, 26) arranged opposite one another on the base (28) of the first fastening device (20) engage around the carrier element (41) of the carrier device (4) in such a manner that they hold it over the full surface, **in that** the second fastening device (30) has at least one rib (31) pointing away from its upper side arranged opposite the upper free end of the carrier element (41), **in that** the second fastening device (30) has at its free end opposite the rib (31) at least one clamping element (34) and has a bead (32) on the clamping element (34), **in that** the rib (31), the clamping element (34) and the bead (32) each extend over the entire width of the second fastening device (30), **in that** the bead (32) is arranged approximately parallel to and spaced apart from the rib (31), and **in that** there is arranged between the rib (31) and the bead (32) an aperture (33) through which a fixing element (9) fixes the second fastening device (30) to the first fastening device (20) on the carrier device (4) by way of a receiving element (29).

2. Busbar system according to claim 1, **characterised in that** the distance from the busbar (1) to the holding element (25, 26) of the first fastening device (20) by way of the clamping element (34), the bead (32) and the rib (31) of the second fastening device (30) is approximately 61 mm.

3. Busbar system according to any one of the preceding claims, **characterised in that** the holding elements (25, 26) of the first fastening device (20) have a height which corresponds approximately to twice the width of the profile foot (12) of the busbar (1).

4. Busbar system according to any one of the preceding claims, **characterised in that** the supporting element (21) is arranged at approximately an acute angle relative to the base (28) of the first fastening device (20).

5. Busbar system according to any one of the preceding claims, **characterised in that** the first fastening device (20) has a receiving element (29) which has at least one adjusting element (27) and receives the second fastening device (30).

6. Busbar system according to any one of the preceding claims, **characterised in that** the at least one rib (31) at least partly covers the busbar (1).

7. Busbar system according to any one of the preceding claims, **characterised in that** the side of the base (28) of the first fastening element (20) that is associated with the carrier element (41) of the carrier device (4) has at least one positioning element (5).

8. Busbar system according to any one of the preceding claims, **characterised in that** the carrier element (41) of the carrier device (4) has at least two openings (43) in the form of slots which are arranged spaced apart from one another.

9. Busbar system according to any one of the preceding claims, **characterised in that** there is arranged in the receiving groove (22) of the first fastening device (20) a damping element (7) which engages around the profile foot (12) of the busbar (1).

10. Busbar system according to any one of the preceding claims, **characterised in that** there is arranged on the clamping element (34) of the second fastening device (30) a damping element (7) which engages around the profile foot (12) of the busbar (1).

11. Busbar system according to any one of the preceding claims, **characterised in that**, spaced apart from the busbar (1) fixed to the carrier device (4) by way of the fastening system (2), there is fastened a busbar (1) which can be fixed to the carrier device (4) by way of a further fastening system (2).

## Revendications

1. Système de barre conductrice comprenant au moins une barre conductrice (1), au moins un système de fixation (2) avec un premier dispositif de fixation (20) ainsi qu'un deuxième dispositif de fixation (30), au moins un dispositif de support (4), dans lequel le système de fixation (2) peut être bloqué sur le dispositif de support (4), tout en recevant au moins une barre conductrice (1), dans lequel les dispositifs de fixation (20, 30) du système de fixation (2) sont fabriqués à partir d'un matériau qui n'est pas électroconducteur, dans lequel le premier dispositif de fixation (20) présente une base (28) avec deux éléments de maintien (25, 26) disposés sur celle-ci de manière à se faire face l'un l'autre, dans lequel le premier dispositif de fixation (20) présente au moins un élément d'appui (21) disposé à distance de la base (28) par l'intermédiaire d'une rainure de réception (22), soutenant au moins en partie la barre conductrice (1) et dans lequel le premier dispositif de fixation (20) présente une hauteur, qui correspond à peu près au double de la largeur de la barre conductrice (1), dans lequel le dispositif de support (4) présente une base (40), qui est reliée de manière orthogonale à un élément de support (41) du dispositif de support (4), **caractérisé en ce que** les deux éléments de maintien (25, 26) disposés sur la base (28) du premier dispositif de fixation (20) de manière à se faire face l'un l'autre entourent tout en le maintenant sur toute la surface l'élément de support (41) du dispositif de support (4), que le deuxième dispositif de fixation (30) présente au moins une nervure (31) pointant en s'éloignant de con côté supérieur, disposé de manière à faire face à l'extrémité libre supérieure de l'élément de support (41), que le deuxième dispositif de fixation (30) présente, sur son extrémité libre faisant face à la nervure (31), au moins un élément de serrage (34) et, sur l'élément de serrage (34), un bourrelet (32), que la nervure (31), l'élément de serrage (34) et le bourrelet (32) s'étendent respectivement sur la totalité de la largeur du deuxième dispositif de fixation (30), que le bourrelet (32) est disposé à peu près de manière parallèle et à distance par rapport à la nervure (31), et qu'est disposé entre la nervure (31) et le bourrelet (32), un évidement (33), à travers lequel un élément de blocage (9) bloque le deuxième dispositif de fixation (30) sur le dispositif de support (4) au premier dispositif de fixation (20) par l'intermédiaire d'un élément de réception (29).

2. Système de barre conductrice selon la revendication 1, **caractérisé en ce que** l'espacement entre la barre conductrice (1), par l'intermédiaire de l'élément de serrage (34), du bourrelet (32) et de la nervure (31) du deuxième dispositif de fixation (30), et l'élément de maintien (25, 26) du premier dispositif de fixation (20) est d'environ 61 mm.

3. Système de barre conductrice selon l'une quelconque des revendications précédentes, **caractérisé en ce que** les éléments de maintien (25, 26) du premier dispositif de fixation (20) présentent une hauteur, qui correspond à peu près au double de la largeur du socle profilé (12) de la barre conductrice (1).

4. Système de barre conductrice selon l'une quelconque des revendications précédentes, **caractérisé en ce que** l'élément d'appui (21) est disposé selon à peu près un angle aigu par rapport à la base (28) du premier dispositif de fixation (20).

5. Système de barre conductrice selon l'une quelconque des revendications précédentes, **caractérisé en ce que** le premier dispositif de fixation (20) présente un élément de réception (29) présentant au moins un élément d'ajustement (27), recevant le deuxième dispositif de fixation (30).

6. Système de barre conductrice selon l'une quelconque des revendications précédentes, **caractérisé en ce que** l'au moins une nervure (31) recouvre au moins en partie la barre conductrice (1).

7. Système de barre conductrice selon l'une quelconque des revendications précédentes, **caractérisé en ce que** le côté, associé à l'élément de support (41) du dispositif de support (4), de la base (28) du premier élément de fixation (20) présente au moins un élément de positionnement (5).

8. Système de barre conductrice selon l'une quelconque des revendications précédentes, **caractérisé en ce que** l'élément de support (41) du dispositif de support (4) présente au moins deux orifices (43) disposés à distance l'un de l'autre, réalisés en tant que trous oblongs.

9. Système de barre conductrice selon l'une quelconque des revendications précédentes, **caractérisé en ce qu'**un élément d'amortissement (7), qui entoure le socle profilé (12) de la barre conductrice (1), est disposé dans la rainure de réception (22) du premier dispositif de fixation (20).

10. Système de barre conductrice selon l'une quelconque des revendications précédentes, **caractérisé en ce qu'**un élément d'amortissement (7), qui entoure le socle profilé (12) de la barre conductrice (1), est disposé sur l'élément de serrage (34) du deuxième dispositif de fixation (30).

11. Système de barre conductrice selon l'une quelconque des revendications précédentes, **caractérisé en ce qu'**une barre conductrice (1) disposée à distance, pouvant être bloquée au dispositif de support (4) par l'intermédiaire d'un autre système de fixation (2), est fixée par la barre conductrice (1) bloquée sur le dispositif de support (4) par l'intermédiaire du système de fixation (2).
